Europäisches Patentamt

European Patent Office

Office européen des brevets

(11) Numéro de publication: **0 069 619**
**B1**

(12) **FASCICULE DE BREVET EUROPEEN**

(45) Date de publication du fascicule du brevet: **29.01.86**

(51) Int. Cl.⁴: **B 23 K 9/225, C 21 D 9/50**

(21) Numéro de dépôt: **82401103.5**

(22) Date de dépôt: **17.06.82**

(54) Installation pour la soudure d'une lame de scie à ruban.

(30) Priorité: **02.07.81 FR 8113564**

(43) Date de publication de la demande:
**12.01.83 Bulletin 83/02**

(45) Mention de la délivrance du brevet:
**29.01.86 Bulletin 86/05**

(84) Etats contractants désignés:
**AT BE CH DE FR GB IT LI LU NL SE**

(56) Documents cités:
**DE-C- 327 810**
**DE-C- 401 352**
**DE-C- 750 865**
**US-A- 212 977**
**US-A-1 494 239**
**US-A-2 164 567**
**US-A-4 007 351**

(73) Titulaire: **Merckel, Lucien**
**1 rue du Stade**
**F-76340 Blangy/Bresle (FR)**
(73) Titulaire: **Merckel, Paul**
**Ansennes Bouttencourt**
**F-80220 Gamaches (FR)**

(72) Inventeur: **Merckel, Lucien**
**1 rue du Stade**
**F-76340 Blangy/Bresle (FR)**
Inventeur: **Merckel, Paul**
**Ansennes Bouttencourt**
**F-80220 Gamaches (FR)**

(74) Mandataire: **Ecrepont, Robert Pierre**
**12 Place Simon Vollant**
**F-59800 Lille (FR)**

Courier Press, Leamington Spa, England.

## Description

L'invention se rapporte à une installation pour la soudure d'une lame de scie à ruban, notamment en vue de la réparation des criques mais aussi en vue de la jonction des deux extrémités d'une lame pour en former un ruban sans fin.

Comme la lame elle-même, sa soudure doit présenter une grande flexibilité et résister à la fatigue dûe aux flexions élastiques répétées qu'elle subit. L'installation est composée d'un poste du soudure et d'un poste de revenu.

Pour cette jonction des deux extrémités d'une lame de scie à ruban, différents procédés sont déjà utilisés.

L'invention se rapporte à une installation pour la soudure par mise en oeuvre d'un procédé de type connu (US—A—4.007.351) selon lequel:

tout d'abord, la lame est serrée sur une table, avec ses faces en vis à vis en appui l'une sur l'autre et fixées sur la table de soudage,

puis, sur la table, contre chaque bord de lame, on place alors un petit morceau de métal pour faciliter l'amorçage de l'arc électrique et entre les faces en vis à vis la soudure est alors opérée en un cordon continu à l'aide d'une torche comportant une amenée de fil de métal d'apport et une amenée de protection tel l'argon selon la technique de soudage communément dénommée "M.I.G",

ensuite, de la zone où s'opère le soudage, le cordon est déplacé pour être rectifié tant sur ses bords qu'en épaisseur et amené à un poste distinct où s'opère le revenu.

Cette installation, composée d'un poste de soudure et d'un poste de revenu, comprend une table au dessus de la zone de laquelle où s'opère le soudage, est fixée une torche alimentée en fil électrode fusible et en gaz de protection et, sur cette table, des brides pour la fixation de la lame pendant la soudure.

Dans ces installations connues à ce jour appliquant ce procédé la lame est fixée sur la table avec ses faces à relier par le cordon de soudure qui sont dressées ce qui augmente le prix de revient et réduit la longueur de la lame.

Au delà des joints entre les extrémités, ce dressage des extrémités interdit de réaliser des réparations de lame ayant par ailleurs au moins une crique qui se présente toujours avec des faces en vis à vis qui sont brutes.

Ces lames, lusqu'à ce jour irréparables, sont donc très rapidement mises au rebut et les frais dûs à leurs remplacements fréquents, se répercutent bien sûr dans les coûts des opérations de sciage.

Dans ces installations connues, le poste de soudure et de revenu sont situés sur des tables différentes ce qui nécessite une manutention en vue du passage d'un poste à un autre.

Quant au revenu qui s'opère à flamme vive, d'une parte, la température de revenu est faible et, d'autre part, dès la coupure du chalumeau, le joint subit un refroidissement brutal créant au contraire du revenu, une trempe à l'air et le résultat du revenu est donc très aléatoire.

Un résultat que l'invention vise à obtenir est une installation du soudure et de revenu d'une lame de scie à ruban qui, selon le procédé décrit ci-dessus, permet aussi bien de réparer les criques que de former le joint entre les extrémités de la lame et qui est en outre simple et d'un prix de revient peu élevé.

Un autre résultat que l'invention vise à obtenir est une telle installation aussurant un revenu avec chauffe suivie d'un refroidissement très lent.

A cet effet, elle a pour objet une installation du type précité caractérisé en ce que:

la lame fixée sur la table a ses faces à relier par le cordon de soudure qui sont laissées brutes,

le poste de revenu est situé sur la table où s'opère le soudage de sorte que le cordon peut être amené vers le poste de revenu par simple translation sur la table,

pendant le revenu, la lame est fixée sur la table par au moins l'une des brides ayant permis de fixer la lame pendant le soudage,

le poste de revenu comprend un accumulateur diffuseur de chaleur consistant en une plaque perforée en céramique et un brûleur chauffant cet accumulateur pour qu'il transmette sa chaleur au cordon,

la torche est associée par des moyens démontables à un berceau lui-même porté par un coulisseau guidé en translation dans un support rendu solidaire de la table et le berceau porte un bras relié à un moyen de commande de sa translation.

Elle sera bien comprise à l'aide de la description ci-après faite à titre d'exemple non limitatif, en regard du dessin ci-annexé qui représente, schématiquement,

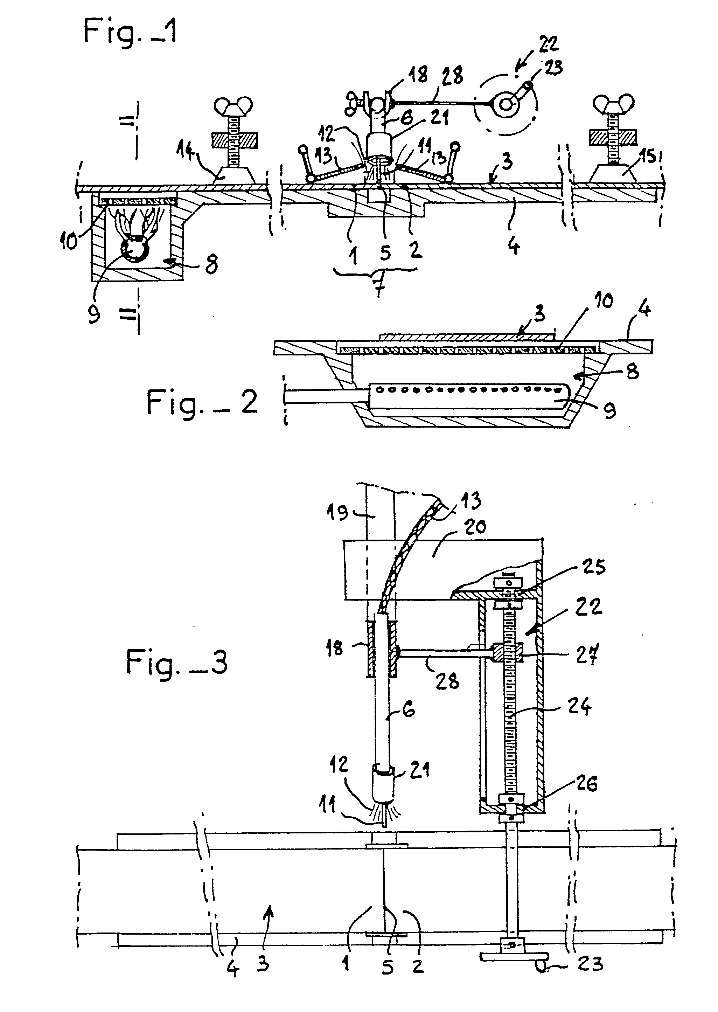

    figure 1: l'installation vue de face,

    figure 2: une coupe selon II—II de la figure 1,

    figure 3: l'installation vue de dessus.

En se reportant au dessin, on voit que dans cette installation, au lieu d'être dressées et écartées l'une de l'autre, les deux faces en vis à vis recevant le cordon de soudure, que ce soit celles d'une crique ou celles des extrémités 1, 2 de la lame 3, sont laissées brutes et bout à bout, en appui l'une sur l'autre, et sont fixées sur une table de soudage 4.

On place alors un petit morceau d'acier à lame de scie contre chaque bord de lame et qui facilite l'amorçage de l'arc électrique et la soudure ets alors opérée en un cordon continu 5 d'un bord à un autre à l'aide d'une torche 6 de soudage comportant une amenée de métal d'apport et une amenée de gaz de protection, tel l'argon plus ou moins pûr, selon la technique de soudage communément dénommée "M.I.G",

ensuite, de la zone 7 où s'opère le soudage, le cordon 5 est déplacé par simple translation sur la table 4 pour être amené à un poste distinct 8 où s'opère le revenu.

on entoure alors le cordon 5 d'un trait de crayon thermochromique d'un type changeant de couleur à température de revenu telle par exemple à six cent soixante dix degrés, puis

on opère alors le revenu à l'aide d'un brûleur 9 chauffant un accumulateur-diffuseur de chaleur 10 qui, par radiation et/ou convection, transmet sa chaleur au cordon 5,

dès que tout le trait a viré, le brûleur 9 est éteint mais le diffuseur ayant accumulé une grande quantité de chaleur, il continue d'assurer au cordon un chauffage qui ne décroît que très progressivement,

en fin de refroidissement, par usinage, que ce soit à la lime et/ou à la meule, le cordon est ramené à la même épaisseur que le reste de la lame et les bords de la lame sont rectifiés.

Si nécessaire, la lame subit alors, dans la zone médiane du cordon, un tensionnage semblable à celui donné à la partie médiane de toute la lame.

On comprend que, travaillant avec des bords bruts, donc non chanfreinés ou dressés, et sans interstices entre eux, cette installation peut s'appliquer directement aux criques, c'est à dire sans nécessiter leur préparation.

Elle comprend une table 4 sur laquelle reponse les deux extrémités 1, 2, de la lame 3.

Ces deux extrémités 1, 2 sont appuyées l'une sur l'autre. Au dessus de la zone 7 où s'opère le soudage, est fixée la torche de soudage 6 alimentée en fil électrode 11 et en gaz de protection 12 à travers une gaine 13 reliée à un poste de soudure (non représenté).

Pour la fixation de la lame 3, à la table 4 sont associées des brides 12, 13 appuyant la lame près du cordon de soudure 5 et des brides 14, 15 appuyant la lame près des extrémités de la table 4.

Au poste de soudure de cette installation est combiné un poste de revenu 8 situé sur la même table 4 que celle où s'opère le soudage et par exemple à une extrémité de cette table 4.

Ce poste de revenu 8 comprend un brûleur 9 chauffant un accumulateur-diffuseur de chaleur 10, tel une plaque perforée en céramique qui, par radiation et/ou convection plutôt que par conduction transmet sa chaleur à la zone de la lame 3 qui doit subir le traitement thermique.

Pour que la lame 3 soit en bonne place par rapport au diffuseur 10, elle est fixée sur la table 4 de l'installation à l'aide d'au moins l'une (14) des brides ayant permis de fixer la lame pendant le soudage.

La torche 6 est associée par des moyens démontables à une berceau 18 lui-même porté par un coulisseau 19 guidé en translation dans un support 20 rendu solidaire de la table 4. Grâce à ce coulisseau 19, la torche a sa buse 21 qui peut être guidée afin d'être à la fois mainenue à une hauteur constante et déplacée parallèlement au cordon de soudure à réaliser, que ce cordon soit parallèle aux bords de la lame ou incliné par rapport à cette direction dans les limites permises par les moyens (non représentés) rendant le support 20 solidaire de la table.

Une des particularités de l'invention tient au fait que la torche n'est pas fixée à demeure par rapport au coulisseau mais, au contraire, simplement déposée dans un berceau d'où notamment elle peut être ôtée,

tant pour la réparation des criques qui ne seraient pas rectilignes et celles qui ne seraient pas perpendiculaires aux bords de la lame ou du moins dont l'inclinaison ne pourrait être prise par le support,

que pour l'utilisation du poste de soudure à d'autres fins. Dans un mode préféré, le berceau 19 est associé à un moyen 22 en vue de sa commande en translation tel un verin à fluide ou un vérin à vis à commande manuelle 23 ou mécanique.

Dans l'exemple représenté où il s'agit d'un vérin à vis, celui-ci comprend une vis 24 guidée en rotation mais immobilisée en translation dans des paliers 25, 26 et sur laquelle vis est monté un écrou 27 libre en translation mais immobilisé en rotation par un bras de commande 28 relié au coulisseau 19. Le but d'une commande du coulisseau est bien entendu d'obtenir une régularité de la vitesse de déplacement de la torche et par là même une soudure régulière.

## Revendication

Installation pour la soudure d'une lame (3) de scie à ruban, notamment en vue de la réparation des criques et pour la jonction des extrémités (1, 2) de cette lame (3) pour en former un ruban sans fin, par mise en oeuvre d'un procédé selon lequel:

tout d'abord, la lame (3) est serrée sur une table (4) avec ses faces en vis à vis en appui l'une sur l'autre et fixées sur la table (4) de soudage,

puis, sur la table, contre chaque bord de lame, on place alors un petit morceau de métal pour faciliter l'amorçage de l'arc électrique et entre les faces en vis à vis, la soudure est alors opérée en un cordon continu (5) à l'aide d'une torche (6) comportant une amenée de fil de métal d'apport (11) et une amenée de gaz de protection (12), tel l'argon, selon la technique de soudage communément dénommée "M.I.G.",

ensuite, de la zone (7) où s'opère le soudage, le cordon (5) est déplacé pour être rectifié tant, sur ses bords qu'en épaisseur et amené à un poste distinct (8) où s'opère le revenu,

laquelle installation, composée d'un poste de soudure et d'un poste de revenu (8) et qui comprend une table (4) au dessus de la zone (6) alimentée en fil électrode fusible (11) et en gaz de protection (12) et sur cette table des brides (12, 13, 14, 15) pour la fixation de la lame (3) pendant la soudure étant caracterisee en ce que:

la lame (3) fixée sur la table (4) a ses faces à relier par les cordons de soudure qui sont laissées brutes,

le poste de revenu (8) est situé sur la table (4) où s'opère le soudage de sorte que le cordon (5) peut être amené vers le poste de revenu (8) par simple translation sur la table (4),

pendant le revenu, la lame (3) est fixé sur la table (4) par au moins l'une (14) des brides ayant permis de fixer la lame pendant le soudage,

le poste de revenu comprend un accumulateur diffuseur de chaleur (10) consistant une plaque perforée en céramique et un brûleur (9) chauffant cet accumulateur (10) pour qu'il transmette sa chaleur au cordon (5),

la torche est associée par des moyens démontables à un berceau (18) lui-même porté par un coulisseau (19) guidé en translation dans un support (20) rendu solidaire de la table (4) et le berceau porte un bras (28) relié à un moyen (22) de commande de sa translation.

## Patentanspruch

Einrichtung zum Löten eines Sägeblattendes (3), nämlich im Hinblick auf das Ausbessern von Rissen und zur Verbindung der Enden (1, 2) des Sägeblatts (3) zu einem Endlosband durch ein Verfahren

bei welchem das Sägeband (3) zunächst auf einem Tisch (4) aufgespannt und mit seinen einander gegenüberliegenden, aneinanderstoßenden Seiten auf dem Löttisch (4) festgelegt wird;

bei welchem anschließend auf dem Tisch gegen jede Kante des Blattes ein kleines Metallstück zur Erleichterung des Übergreifens des Lichtbogens gesetzt und der Lötvorgang in einer kontinuierlichen Naht (5) mit Hilfe einer Fackel (6) durchgeführt wird, die eine Zuleitung für Lötdraht (11) und eine Zuleitung für Schutzgas (12), zum Beispiel Argon, aufweist, und zwar nach einer Löttechnik, die allgemein "M.I.G." genannt wird;

und bei welchem die Naht (5) zwecks Feinbearbeitung in bezug auf die Ränder sowie auf die Dicke aus der Lötzone (7) herausgeführt und einem anderen Bearbeitungsposten (8) zugeführt wird, an welchem das Nachglühen stattifindet;

wobei die aus einem Lötposten und aus einem Nachglühposten (8) gebildete Einrichtung, die über der mit Lötdraht (11) und Schutzgas (12) versorgten Zone (6) einen Tisch (4) und auf diesem Tisch Spannelemente (12, 13, 14, 15) zur Festlegung des Sägeblatts (3) während des Lötvorgangs aufweist, dadurch gekennzeichnet ist, daß die durch die Lötnaht miteinander zu verbindenden Flächen des auf dem Tisch (4) angeordneten Sägeblatts (3) unbehandelt gelassen werden, daß der Nachglühposten (8) auf dem Tisch (4), wo der Lötvorgang stattfindet, derart angeordnet ist, daß die Naht bzw. Nahtstelle (5) dem Nachglühposten (8) durch einfache Translation auf dem Tisch (4) zugeführt werden kann, daß während des Nachglühens das Sägeblatt (3) auf dem Tisch (4) durch mindestens eines (14) der Spannelemente festgehalten ist, die auch zum Festlegen des Sägeblatts während des Lötvorgangs dienen, daß der Nachglühposten einen Diffusions-Wärmespeicher (10) aufweist, der aus einer Keramik-Lochplatte und einem Brenner (9) zum Erwärmen des Speichers (10) dient, der seine Wärme auf die Naht bzw. Nahtstelle (5) überträgt, und daß die Fackel über abnehmbare Elemente mit einem Käfig (18) verbunden ist, der selbst durch ein Gleitelement (19) gehalten ist, das in einer mit dem Tisch (4) fest verbundenen Halterung (20) translatorisch geführt ist, und daß der Käfig einen Arm (28) aufweist, der mit einem Element (22) für dessen translatorischen Antrieb verbunden ist.

## Claim

Appliance for welding a continuous saw blade (3), more particularly for repairing cracks and for joining the ends (1, 2) of the said blade (3) in order to form a continuous band, by carrying out a process, according to which:

the blade (3) is firstly clamped onto a table (4) with its opposite faces abutting and is secured to the welding table (4),

a small amount of metal is then applied to each blade edge on the table in order to facilitate the striking of the electric arc between the two opposite faces, the welding is then carried out in a continuous strip (5) by means of a torch (6) comprising a supply of filler metal wire (11) and a supply of protective atmosphere (12), such as argon, according to the welding technique generally called "M.I.G",

the welding strip (5) is then moved from the area (7) where the welding is carried out in order to be surface-ground both at its edges and in its thickness, and is brought to a separate station (8) where the tempering takes place,

the said appliance, which comprises a welding station and a tempering station (8) and has a table (4) above the area (6) which is supplied by a fusible wire electrode (11) and a protective gas (12), and, on the table, clamps (12, 13, 14, 15) for securing the blade (3) during the welding, being characterised in that:

the blade (3) which is secured to the table (4), has its edges, which are to be joined by the welding strip, left in a rough state,

the tempering station (8) is disposed on the table (4) where the welding takes place such that the welding strip (5) can be brought towards the tempering post (8) by means of a simple displacement on the table (4),

during the tempering, the blade (3) is secured to the table by at least one (14) of the clamps which are provided for securing the blade during welding,

the tempering station comprises a heat accumulator/diffuser (10) comprising a perforated ceramic plate and a burner (9) which heats the said accumulator (10) in order that it may transmit its heat to the welding strip (5),

the torch is connected by detachable means to a mounting (18), which itself is supported by a slide (19), which is displaceably guided in a support (20), which is made integral with the table (4), and the mounting bears an arm (28) which is connected to a means (22) which controls the displacement· thereof.

Fig. _1

Fig. _2

Fig. _3